# EUROPEAN PATENT APPLICATION

(11) **EP 1 201 377 A2**
(43) Date of publication of application: **02.05.2002**
(21) Application number: 01308511.3
(22) Date of filing: 04.10.2001
(51) Int. Cl.: B26D 7/00, B26B 29/06

(54) **Guiding device**

(30) Priority: 04.10.2000 GB 0024260
(71) Applicant: Dando, Bryn James, Llanishen, Cardiff CF14 5AQ (GB)
(72) Inventor: Dando, Bryn James, Llanishen, Cardiff CF14 5AQ (GB)
(74) Representative: Gibson, Stewart Harry

(57) **Abstract**

A guiding device, for slicing a loaf or other food item, comprises a board 10 on which to rest the item of food, the board being formed with two spaced-apart pairs of bores or sockets to receive the ends of guiding elements, such as a pair of U-shaped hoops 16, to define a generally vertically-extending guide plane for the blade of a cutting knife.

## Description

The present invention relates to a guiding device for use in slicing a loaf of bread or cutting or slicing other food items.

It is often difficult to slice a loaf accurately. Difficulties are also encountered by those who are disabled (e.g. the blind or partially-sighted, or suffering from arthritis or other disabilities) in cutting or slicing various food items, e.g. carrots, celery, cabbage etc.

I have now devised a device which, in use, effectively acts to guide the cutting blade of a knife, to facilitate the slicing of a loaf of bread or other food item.

In accordance with the present invention, there is provided a guiding device which comprises a board on which to rest one or more items of food to be cut or sliced, the board being formed with two spaced-apart pairs of bores or sockets and the device further comprising elements for fitting into said bores or sockets to define a generally vertically-extending guide plane for a blade of a cutting knife.

The guide elements may comprise two pairs of pins or rods for fitting, at their lower ends, into respective bores or sockets in the board. Preferably upper end portions of the pins or rods are bent to an inclined angle relative to the remainder of their lengths. Each pair of pins or rods may then be fitted into their respective bores or sockets, with their upper end portions splayed away from each other, to opposite sides of the guide plane, to provide a tapering entry for the knife blade.

The guide elements may instead comprise a pair of U-shaped hoops, the ends of which fit into the bores or sockets in the board, the guide plane being formed between the two hoops. Preferably the upper portions of the two hoops are bent out of the respective planes of the hoops, again to form a tapering entry for the knife blade.

Preferably the board is formed of plastics material (preferably white) or of wood.

Preferably the guide elements are formed from lengths of metal wire or rod, preferably stainless steel.

The board may be formed with a number of sets of bores or sockets, to enable their positions to be selected and/or the width of the gap, for reception of the knife blade, to be selected.

Preferably a stop is provided, to extend across the board and for an item of food to be cut to abut.

It will be appreciated that the device enables a loaf of bread, pie or other food item to be cut accurately. Also, the device enables a blind or partially-sighted person to cut or slice food items with reduced risk of cutting themselves with the knife blade. Moreover, for those suffering from arthritis, or the elderly having a weak grip, the device helps in cutting an item of food, by guiding the knife to move in a vertical plane. The device may be used equally well by left- or right-handed persons. It will also be noted that the device may be dismantled and packed flat for transport or storage.

Embodiments of the present invention will now be described by way of example only and with reference to the accompanying drawings, in which:
FIGURE 1 is an isometric view of a first embodiment of device, in accordance with the invention, for guiding a cutting knife;
FIGURE 2 is an isometric view of a second embodiment of guiding device in accordance with the invention; and
FIGURE 3 is an isometric view of a third embodiment of guiding device in accordance with the invention.

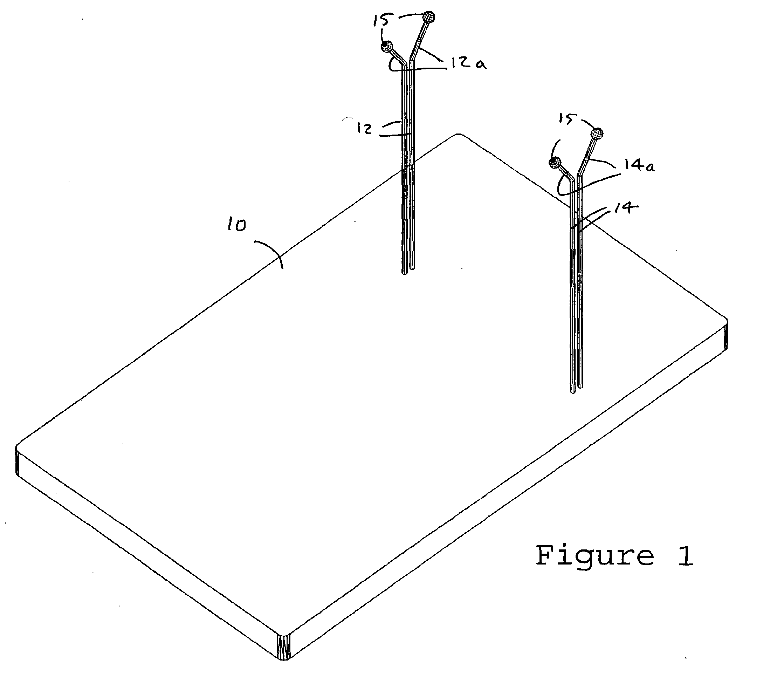

Referring to Figure 1 of the drawings, there is shown a guiding device which comprises a flat, generally rectangular board 10 which is formed with two pairs of bores of sockets drilled into it: the two pairs of bores receive the lower ends of respective pairs of upright metal pins or rods 12,14, preferably of stainless steel. The two pairs of bores are spaced apart widthwise of the board 10 and the two bores of each pair are spaced a relatively short distance apart lengthwise of the board. The pins or rods 12,14 thus define a narrow gap and thereby a vertical plane for constraining the movement of a knife blade. The pins or rods 12,14 have portions 12a,14a at their tops which are bent to an inclined angle, to project upwardly and outwardly: caps 15 of plastics material are fitted to the top ends of the pins or rods 12,14.

The pins or rods 12,14 are removable but, when fitted into the board 10 for use, are oriented so that, in each pair, the bent top portions extend away from each other, lengthwise of the board 10, to form a tapering entry for a knife blade.

The arrangement allows the blade of a cutting knife to be moved downwardly, firstly between the bent top portions of both pairs of pins 12,14 and then into the gaps between the main lengths of both pairs of pins.

It will be appreciated that a loaf may be placed lengthwise on the board 10, with one end between the two pairs of pins 12,14, then the cutting blade of the knife used to slice the loaf, the blade being constrained by the pins 12,14 to move in a vertical plane. The device may be used for cutting any other desired item of food, such as fruit or vegetables.

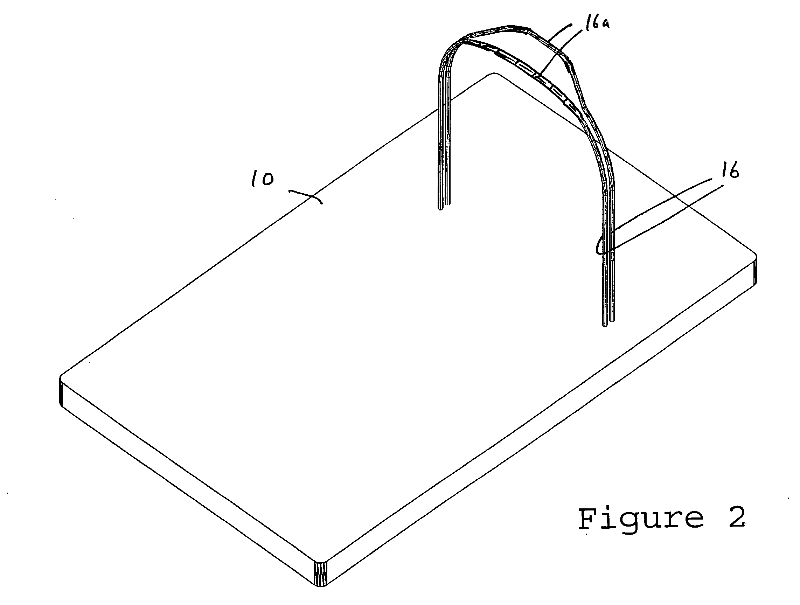

Figure 2 shows a second embodiment of grinding device, comprising a board 10 which is formed with two pairs of bores or sockets, as in the embodiment of Figure 1. In the device of Figure 2, the bores or sockets in the board receive the ends of two generally U-shaped metal hoops 16. The upper portions 16a of these hoops are bent out of the planes of the respective hoops, to provide a tapering entry guide for the cutting blade of the knife, when moved downwardly into the small gap between the two hoops. Again, the two hoops define a vertical plane in which the knife blade is constrained to move.

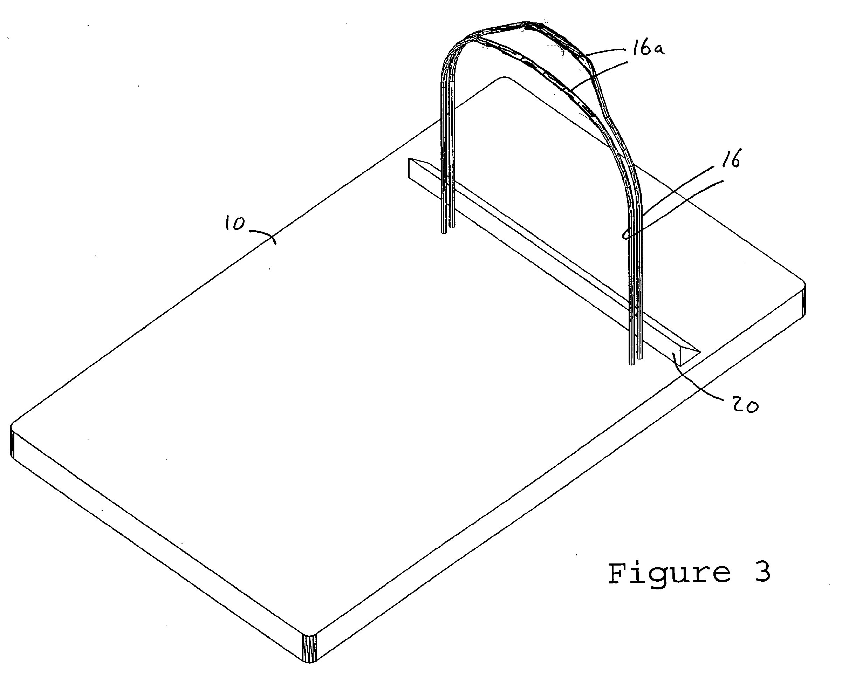

The device of Figure 3 is the same as the device of Figure 2, except that the board 10 is fitted with an elongate stop 20 which extends across the board 10 adjacent the pair of hoops 16 and forms a stop against which the item being cut may abut. The stop 20 may be fixed but is preferably removable: thus, the stop may have pins projecting from its underside, to engage in bores or sockets formed in the board 10. Preferably the board 10 is provided with a number of sets of such bores or sockets, so that its position is selectable or adjustable.

## Claims

1. A guiding device which comprises a board on which to rest one or more items of food to be cut or sliced, the board being formed with two spaced-apart pairs of bores or sockets and the device further comprising elements for fitting into said bores or sockets to define a generally vertically-extending guide plane for a blade of a cutting knife.

2. A device as claimed in Claim 1, in which said elements comprise two pairs of pins or rods for fitting, at their lower ends, into respective said bores or sockets in said board.

3. A device as claimed in Claim 1, in which upper end portions of said pins or rods are bent to an inclined angle relative to the remainder of their lengths.

4. A device as claimed in Claim 1, in which said elements comprise a pair of U-shaped hoops, the ends of which fit into respective said bores or sockets in said board.

5. A device as claimed in Claim 4, in which upper portions of the two hoops are bent out of the respective planes of the hoops, to form a tapering entry for the knife blade.

6. A device as claimed in any preceding claim, in which said elements are formed from lengths of metal wire or rod.

7. A device as claimed in any preceding claim, in which said board is formed with a number of sets of said bores or sockets, to enable the position or width of said guide plane to be selected.

8. A device as claimed in any preceding claim, further comprising a stop to extend across said board.
